# EUROPEAN PATENT SPECIFICATION

(11) **EP 1 644 831 B1**
(45) Date of publication and mention of the grant of the patent: **17.12.2008**
(21) Application number: 04743255.4
(22) Date of filing: 02.07.2004
(51) Int. Cl.: G06F 9/46, G06F 1/32

(54) **A METHOD OF ENABLING A MULTITASKING COMPUTING DEVICE TO CONSERVE RESOURCES**
VERFAHREN, DAS ES EINER MULTITASKING-DATENVERARBEITUNGSEINRICHTUNG ERMÖGLICHT, BETRIEBSMITTEL ZU SPAREN
PROCEDE PERMETTANT A UN DISPOSITIF INFORMATIQUE MULTITACHE DE CONSERVER SES RESSOURCES

(30) Priority: 02.07.2003 GB 0315492
(43) Date of publication of application: 12.04.2006
(73) Proprietor: UIQ Technology AB, 372 25 Ronneby (SE)
(72) Inventor: OESTVALL, Magnus, Evert, SE-371 35 Karlskrona (SE)
(74) Representative: Valea AB
(86) International application number: PCT/GB2004/002912
(87) International publication number: WO 2005/003970

(56) References cited:
- EP-A- 0 942 368
- WO-A-01/04743
- HASSLER V ET AL: "Controlling applets' behavior in a browser" COMPUTER SECURITY APPLICATIONS CONFERENCE, 1998. PROCEEDINGS. 14TH ANNUAL PHOENIX, AZ, USA 7-11 DEC. 1998, LOS ALAMITOS, CA, USA,IEEE COMPUT. SOC, US, 7 December 1998 (1998-12-07), pages 120-125, XP010318612 ISBN: 0-8186-8789-4
- "RWsSession in Window Server" [Online] 2002, SYMBIAN , XP002306026 Retrieved from the Internet: URL:http://www.symbian.com/developer/techl ib/v70docs/sdl_v7.0/doc_source/reference/c pp/WindowServerClientSide/RWsSessionClass. html> the whole document
- SCHMID M ET AL: "Preventing the execution of unauthorized win32 applications" IEEE, vol. 2, 12 June 2001 (2001-06-12), pages 175-183, XP010548745

## Description

### BACKGROUND OF THE INVENTION

### 1. Field of the Invention

This invention relates to a method of enabling a multitasking computing device to preserve or conserve resources, such as battery power. The term 'computing device' used in this patent specification should be expansively construed to cover any kind of computing device and includes without limitation radio telephones, smart phones, communicators, personal computers, lap top computers, game consoles, computers and application specific devices.

### 2. Description of the Prior Art

Battery conservation in battery operated computing devices is very important, particularly in devices such as smartphones that consume high power levels by virtue of connecting to always-on GPRS or 3G cellular networks.

In conventional multi-tasking computers running several different applications at the same time, an application will issue a software interrupt to the operating system when it first requests services; interrupts from different applications are prioritised and queued by an interrupt handler. A scheduler starts and ends applications and manages concurrently running applications.

Conventionally, the scheduler will end an application when instructed to do so by the end user, e.g. selecting a 'close' option in the application's drop down menu. Consequently, without an explicit 'close' command, applications will continue to run even when not actually in active use; they will therefore continue to use some system resources, even when residing in the 'background'. An application is in the background if it is not being interacted with by an end-user and it presents no user interface with which a user could interact (but it could for example present an icon indicating its presence and the fact that it was still active). A foreground application conversely does present a user interface with which a user can interact.

Hence, the problem of battery conservation is especially acute for multi-tasking devices, i.e. devices with an operating system that can run several applications at the same time.

Reference may be made to EP 942368 (Lucent), which describes how background tasks can be discriminated from foreground tasks. It however has no bearing on denying system resources to an *untrusted* application. Reference may also be made to Hassler "Controlling applets' behaviour in a browser" Computer Security Applications conference, 1998. Proceedings 14th Annual Phoenix, AZ, USA 7- 11 Dec, Los Alamitos, CA, USA, IEEE Comput Soc, US, 7 December 1998 (1998-12-07) pages 120 - 125, XP010318612 ISBN: 0-8186-8789-4. Hassler teaches that if an applet looks untrusted, then it is stopped or suspended. But there is no discrimination depending on whether the application is in the foreground or background.

### SUMMARY OF THE INVENTION

In a first aspect of the present invention, there is provided a method of enabling a multitasking computing device to preserve system resources according to claim 1.

It is valuable to preserve system resources (CPU, power) in multitasking computing devices: For mains powered desktop computers, the fact that applications can run in the background and hence still consume some system resource is a waste of CPU and scheduler activity. And in the battery operated, portable device domain, it is especially valuable to conserve system resources wherever possible since doing so can increase battery life, as noted earlier.

A device implementing the present invention preserves system resources by denying system resources and services to background applications that do not meet predefined 'trust' or certification criteria - i.e. criteria which define the level of trustworthiness of the application. There are various criteria that may be relevant in assessing whether a give application is 'untrusted' or not; these include, without limitation:
(a) which protected resources on the device can be accessed by the application: an 'untrusted' application might be defined as one that is not able to access certain predefined protected resources; or
(b) whether the application was loaded from ROM or RAM: applications loaded from RAM are likely to be from third party sources and hence less trustworthy than applications loaded from ROM, which would typically be provided by the device manufacturer; or
(c) whether the application has been validated using some predefined validation or certification process.

Applications might, in theory, be written so that they take notice of an event sent to them when they are sent to background, causing them to automatically cease running. But even this is likely to be missed in applications which are from certain kinds of third party programmers or are not validated as proper implementations - i.e. 'untrusted' applications. 'Untrusted' applications are therefore more likely to contain a wrong implementation of normal background behaviour: hence, merely relying on an application to voluntarily cease running when notified that it is in the background is an inadequate strategy for untrusted applications. Instead, they need to be actively prevented from running.

With the present invention, untrusted third party applications (such as downloaded applications like games) are prevented from running in the background and are suspended. Trusted applications may still be allowed to run in the background, or they may be actively prevented in the same way as non-trusted applications, or they may be requested (but not prevented) to stop running if in background. Trust will conventionally be established for a given application using a signature in the application installation file, although there are other techniques that may be deployed as part of the secure computing base of the device.

In a second aspect, there is provided a multitasking computing device according to claim 12 The device may be battery powered.

In a third aspect, there is provided an operating system for a multitasking computing device according to claim 14.

### BRIEF DESCRIPTION OF THE DRAWING

The invention will be described with reference to the accompanying drawing, which is a schematic of some of the components of a device in accordance with the present invention.

### DETAILED DESCRIPTION

The present invention can be implemented on battery operated devices running SymbianOS operating system. SymbianOS based phones are 'open' for third party applications. The third party applications are often games or similar types of applications and, when these execute, the CPU is often running at full speed to update graphics, sounds etc. When the user or the system needs to display another application or dialog, there is a risk that the third party application will still run in the background and thus drain the battery.

Third party applications can either come from 'trusted' sources or 'untrusted' sources. This may be determined by a signature in the installation file. An alternative approach to platform security on SymbianOS is described in PCT/GB2003/002311, the contents of which are incorporated by preference.

With the present invention, when an untrusted application is running on the battery operated device and another application should be in the foreground, the untrusted application is placed into the background and is also actively prevented from running. This denies it system resources and hence preserves power, as well as unnecessary CPU activity associated with the untrusted application in background. Preserving system resources could be especially valuable not only in the context of portable, battery powered devices, but also a UPS (uninterruptible power supply) powered system: once activated because a primary power source has ceased to provide power, the need to preserve system resources for as long as possible is very valuable. When the untrusted application is brought to the foreground again, it is allowed to run again.

The scheme is implemented by a system component which both knows which processes and threads belong to trusted or untrusted applications as well as knows which application is in foreground and which ones are in background. In Symbian OS, this is most likely to be the window server component. C++ and Java applications can also be controlled in this way.

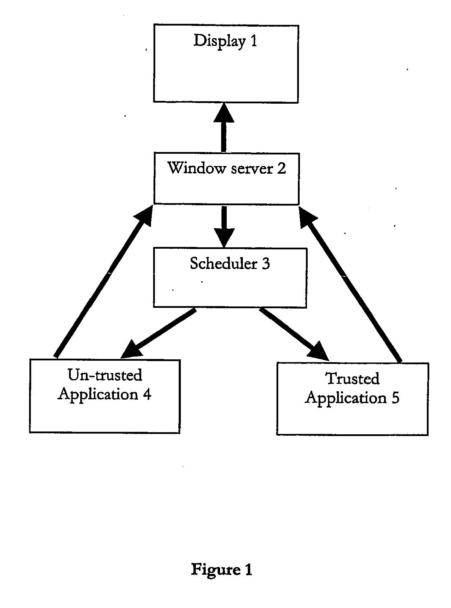

Referring now to Figure 1, a window server component 2 is used to determine if an application is in the background or foreground on display 1; for an untrusted application 4 in the background, it can send a control signal to the scheduler 3 or interrupt handler that in effect prevents the untrusted application 4 from running, e.g. being given any services or consuming any resources. The scheduler could for example, simply operate so as to never allocate any services or resources to the background untrusted application 4; an alternative would be for the interrupt handler to simply place any interrupts from the background untrusted application 4 to the back of its queue and never allow them to be executed. When in the background, trusted application 5 may continue to run, or may be actively prevented in the same way as non-trusted application 4, or may be requested (but not prevented) to stop running.

One example use of the present invention is to prevent background untrusted applications from 'polling' for data over a wireless network, an activity that can potentially drain a battery quickly. Another example is that untrusted applications will automatically be prevented from running if the display shows a screen saver or is actually turned off (battery operated devices can perform useful functions such as telephony even when the screen is turned off). Hence, the present invention is a valuable addition to power conservation strategies, especially (although without limitation) to battery operated devices.

When the device determines that an application is in the foreground (again, as may be determined by a window server component), it allows that application to run again - e.g. to be provided with resources and services.

## Claims

1. A method of enabling a multitasking computing device to preserve system resources, comprising the steps of (a) determining if an untrusted application is in the background or foreground and (b) suspending the running of an untrusted application while that application is in the background but allowing the untrusted application to run again once in the foreground, wherein an application is in the background if it is being non-interacted with by an end-user and is presenting no user interactable user interface and an application is in the foreground if it is presenting a user interactable user interface.

2. The method of claim 1 in which a window server component determines if the untrusted application is in the background or foreground.

3. The method of claim 2 in which, for an untrusted application in the background, the window server sends a control signal to a scheduler or interrupt handler to prevent the application from running.

4. The method of claim 1 comprising the further step of preventing an untrusted background application from polling for data over a wireless network.

5. The method of claim 1 comprising the further step of preventing an untrusted background application from running if a display shows a screen saver or is turned off.

6. The method of claim 1 in which a trusted application in the background is (i) still allowed to run, or (ii) actively prevented from running or (iii) requested to stop running.

7. The method of claim 7 in which an application has been deemed to be untrusted by the device assessing:
(a) which protected resource on the device can be accessed by the application; or
(b) whether the application was loaded from ROM or RAM; or
(c) whether the application has been validated using some predefined validation or certification process.

8. The method of claim 7 in which a background application is prevented from running only if it does not meet predefined trust or certification criteria established using a signature in an installation file for the application.

9. The method of claim 1 in which the device is battery powered.

10. The method of claim 1 in which the system resources that are preserved are one or more of (i) power, (ii) CPU activity and (iii) scheduler activity.

11. The method of claim 1 in which the device is powered by an uninterruptible power supply.

12. A multitasking computing device programmed to be capable of (a) determining if an untrusted application is in the background or foreground and (b) suspending the running of an untrusted application while that application is in the background but allowing the untrusted application to run again once in the foreground, wherein an application is in the background if it is being non-interacted with by an end-user and is presenting no user interactable user interface and an application is in the foreground if it is presenting a user interactable user interface.

13. The device of claim 11 which is battery powered.

14. An operating system for a multitasking computer device, the operating system being capable of performing the method according to claim 1.

## Patentansprüche

1. Verfahren zum Befähigen einer Mehrprogrammbetriebs-Datenverarbeitungseinrichtung, Systembetriebsmittel zu bewahren, welches folgende Schritte umfasst: (a) Bestimmen, ob eine unzuverlässige Anwendung im Hintergrund oder Vordergrund ist, und (b) Unterbinden des Ablaufens einer unzuverlässigen Anwendung, während diese Anwendung im Hintergrund ist, jedoch Zulassen, dass die unzuverlässige Anwendung noch einmal im Vordergrund abläuft, wobei eine Anwendung im Hintergrund ist, wenn sie nicht wechselseitig durch einen Endbenutzer beeinflusst wird und keine durch einen Benutzer wechselseitig-beeinflussbare Schnittstelle darstellt, und eine Anwendung im Vordergrund ist, wenn sie eine durch einen Benutzer wechselseitig-beeinflussbare Benutzerschnittstelle zeigt.

2. Verfahren nach Anspruch 1, bei dem eine Fensterserverkomponente bestimmt, ob die unzuverlässige Anwendung im Hintergrund oder im Vordergrund ist.

3. Verfahren nach Anspruch 2, bei dem - für eine unzuverlässige Anwendung im Hintergrund - der Fensterserver ein Steuersignal zu einer Ablaufsteuerung oder einem Unterbrechungsprogramm sendet, um zu verhindern, dass die Anwendung abläuft.

4. Verfahren nach Anspruch 1, welches außerdem den Schritt umfasst, zu verhindern, dass eine unzuverlässige Hintergrundanwendung Daten über ein drahtloses Netzwerk abruft.

5. Verfahren nach Anspruch 1, welches außerdem den Schritt umfasst, zu verhindern, dass eine unzuverlässige Hintergrundanwendung abläuft, wenn eine Anzeigeeinrichtung einen Bildschirmschoner zeigt oder abgeschaltet ist.

6. Verfahren nach Anspruch 1, bei dem eine zuverlässige Anwendung im Hintergrund (i) noch ablaufen darf, oder (ii) aktiv daran gehindert wird, abzulaufen, oder (iii) aufgefordert wird, das Ablaufen anzuhalten.

7. Verfahren nach Anspruch 6, bei dem eine Anwendung durch die Einrichtung als unzuverlässig betrachtet wird, wobei bewertet wird:
(a) auf welches geschützte Betriebsmittel in der Einrichtung durch die Anwendung zugegriffen werden kann; oder
(b) ob die Anwendung von einem ROM oder RAM heruntergeladen wurde; oder
(c) ob die Anwendung unter Verwendung eines fest-programmierten Datenüberprüfungs- oder Zertifizierungsprozesses überprüft wurde.

8. Verfahren nach Anspruch 7, bei dem verhindert wird, dass eine Hintergrundanwendung abläuft, lediglich, falls sie nicht fest-programmierte Vertrauens- oder Zertifizierungskriterien, die eingerichtet sind, erfüllt, indem eine Signatur in einer Installationsdatei für die Anwendung verwendet wird.

9. Verfahren nach Anspruch 1, bei dem die Einrichtung durch eine Batterie mit Leistung versorgt wird.

10. Verfahren nach Anspruch 1, bei dem die System-Betriebsmittel, welche bewahrt werden, eines oder mehrere sind von (i) Leistung, (ii) CPU-Aktivität und (iii) Ablaufsteuerungs-Aktivität.

11. Verfahren nach Anspruch 1, wobei die Einrichtung durch eine nichtunterbrechbare Leistungsversorgung mit Leistung versorgt wird.

12. Mehrprogrammbetriebs-Datenverarbeitungseinrichtung, die programmiert ist, um in der Lage zu sein, (a) zu bestimmen, ob eine unzuverlässige Anwendung im Hintergrund oder im Vordergrund ist, und (b) das Ablaufen einer unzuverlässigen Anwendung zu unterbinden, während diese Anwendung im Hintergrund ist, jedoch Zulassen, dass die unzuverlässige Anwendung noch einmal im Vordergrund abläuft, wobei eine Anwendung im Hintergrund ist, wenn sie nicht durch einen Endbenutzer wechselseitig beeinflusst wird oder keine durch einen Benutzer wechselseitig-beeinflussbare Benutzerschnittstelle zeigt, und eine Anwendung im Vordergrund ist, wenn sie eine durch einen Benutzer wechselseitig-beeinflussbare Benutzerschnittstelle zeigt.

13. Einrichtung nach Anspruch 11, welche durch eine Batterie mit Leistung versorgt wird.

14. Betriebssystem für eine Mehrprogrammbetriebs-Datenverarbeitungseinrichtung, wobei das Betriebssystem in der Lage ist, das Verfahren nach Anspruch 1 durchzuführen.

## Revendications

1. Procédé consistant à permettre à un dispositif informatique multitâche d'économiser des ressources système, comprenant les étapes consistant à (a) déterminer si une application non sécurisée est en arrière-plan ou au premier plan et (b) suspendre l'exécution d'une application non sécurisée pendant que cette application est en arrière-plan, mais permettre à l'application non sécurisée de s'exécuter de nouveau une fois qu'elle est au premier plan, dans lequel une application est en arrière-plan si un utilisateur final n'interagit pas avec elle et ne présente pas d'interface utilisateur avec laquelle l'utilisateur peut interagir et dans lequel une application est au premier plan si elle présente une interface utilisateur avec laquelle un utilisateur peut interagir.

2. Procédé selon la revendication 1, dans lequel un composant serveur de fenêtres détermine si l'application non sécurisée est en arrière-plan ou au premier plan.

3. Procédé selon la revendication 2, dans lequel, pour une application non sécurisée en arrière-plan, le serveur de fenêtres envoie un signal de commande à un planificateur ou à un gestionnaire d'interruptions pour empêcher l'application de s'exécuter.

4. Procédé selon la revendication 1, comprenant l'étape supplémentaire consistant à empêcher une application en arrière-plan non sécurisée de rechercher des données sur un réseau sans fil.

5. Procédé selon la revendication 1, comprenant l'étape supplémentaire consistant à empêcher une application en arrière-plan non sécurisée de s'exécuter si un dispositif d'affichage présente un économiseur d'écran ou est éteint.

6. Procédé selon la revendication 1, dans lequel une application sécurisée en arrière-plan est (i) encore autorisée à s'exécuter, ou (ii) est activement empêchée de s'exécuter ou (iii) reçoit une demande d'arrêt de l'exécution.

7. Procédé selon la revendication 7, dans lequel une application a été considérée comme étant non sécurisée en faisant en sorte que le dispositif évalue :
(a) quelle est la ressource protégée sur le dispositif à laquelle peut accéder l'application ; ou
(b) si l'application a été chargée depuis une ROM ou une RAM ; ou
(c) si l'application a été validée en utilisant un certain processus prédéfini de validation ou de certification.

8. Procédé selon la revendication 7, dans lequel une application en arrière-plan n'est empêchée de s'exécuter que si elle ne respecte pas des critères prédéfinis de sécurisation ou de certification établis en utilisant une signature dans un fichier d'installation destiné à l'application.

9. Procédé selon la revendication 1, dans lequel le dispositif est alimenté par batterie.

10. Procédé selon la revendication 1, dans lequel les ressources système qui sont économisées sont constituées d'une ou plusieurs (i) de l'alimentation en énergie, (ii) de l'activité de la CPU (unité centrale) et (iii) de l'activité du planificateur.

11. Procédé selon la revendication 1, dans lequel le dispositif est alimenté par une alimentation électrique ininterruptible.

12. Dispositif informatique multitâche programmé pour pouvoir (a) déterminer si une application non sécurisée est en arrière-plan ou au premier plan et (b) suspendre l'exécution d'une application non sécurisée pendant que cette application est en arrière-plan, mais permettre à l'application non sécurisée de s'exécuter de nouveau une fois qu'elle est au premier plan, dans lequel une application est en arrière-plan si un utilisateur final n'interagit pas avec elle et ne présente pas d'interface utilisateur avec laquelle l'utilisateur peut interagir et dans lequel une application est au premier plan si elle présente une interface utilisateur avec laquelle un utilisateur peut interagir.

13. Dispositif selon la revendication 11, qui est alimenté par batterie.

14. Système d'exploitation pour dispositif informatique multitâche, le système d'exploitation étant capable de mettre en oeuvre le procédé selon la revendication 1.
